(19) **Europäisches Patentamt**

**European Patent Office**

**Office européen des brevets**

(11) **EP 1 645 129 B1**

(12) **FASCICULE DE BREVET EUROPEEN**

(45) Date de publication et mention
de la délivrance du brevet:
**02.11.2006 Bulletin 2006/44**

(21) Numéro de dépôt: **04767626.7**

(22) Date de dépôt: **08.07.2004**

(51) Int Cl.:
**H04N 7/167** (2006.01)

(86) Numéro de dépôt international:
**PCT/FR2004/001794**

(87) Numéro de publication internationale:
**WO 2005/009040 (27.01.2005 Gazette 2005/04)**

(54) **METHODE DE CHIFFRAGE D'UN FLUX AUDIO OU VIDEO COMPRESSE A TOLERANCE D'ERREURS**

VERFAHREN ZUR VERSCHLÜSSELUNG EINES FEHLERTOLERANZ-KOMPRIMIERTEN AUDIO-ODER VIDEOSTROMS

METHOD FOR ENCRYPTING AN ERROR-TOLERANCE COMPRESSED AUDIO OR VIDEO STREAM

(84) Etats contractants désignés:
**DE FR GB IT**

(30) Priorité: **16.07.2003 FR 0308641**

(43) Date de publication de la demande:
**12.04.2006 Bulletin 2006/15**

(73) Titulaire: **STMicroelectronics S.A.**
**92120 Montrouge (FR)**

(72) Inventeurs:
• **NICOLAI, Jean**
**13790 Chateauneuf Le Rouge (FR)**
• **ORLANDO, William**
**13790 Peynier (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 0 582 122**

• **SHI C ET AL: "AN EFFICIENT MPEG VIDEO ENCRYPTION ALGORITHM" PROCEEDINGS OF THE 17TH IEEE SYMPOSIUM ON RELIABLE DISTRIBUTED SYSTEMS. SRDS '98. WEST LAFAYETTE, IN, OCT. 20 - 23, 1998, IEEE SYMPOSIUM ON RELIABLE DISTRIBUTED SYSTEMS, LOS ALAMITOS, CA: IEEE COMPUTER SOC, US, 20 octobre 1998 (1998-10-20), pages 381-386, XP000873379 ISBN: 0-7803-5205-X cité dans la demande**

**Description**

La présente invention est relative à une méthode de traitement de données compressées, et à des appareils et supports pour sa mise en oeuvre.

Le domaine technique de l'invention est celui de la fabrication de codeurs de données audio et/ou vidéo.

L'invention est plus particulièrement relative à une méthode de chiffrage sélectif (partiel) de données audio ou vidéo par un algorithme de chiffrement, les données étant compressées et organisées selon un format standardisé, et pouvant comporter des mots codés de longueur variable.

La distribution sécurisée de documents vidéo est aujourd'hui limitée à la diffusion de télévision" à péage" par câble ou satellite ; la sécurité est assurée par des systèmes de chiffrement" propriétaires" , qui sont définis, mis en oeuvre et contrôlés par un prestataire unique : le diffuseur.

Les nouveaux standards de vidéo à faible débit, l'Internet haute vitesse et les terminaux portables en réseau sans fil, de type téléphone 3G ou assistant personnel, devraient bientôt permettre la distribution de documents vidéo : téléconférence, messages multimédias, bandes annonces de films, actualités sportives en direct, vidéo à la demande, notamment.

Des besoins de sécurité apparaissent, qui ne peuvent être satisfaits par les solutions actuelles. Les contraintes sont les suivantes :

a- la syntaxe du flux chiffré doit rester le plus conforme possible au standard de codage, afin de faciliter le transport en réseau ; la méthode de traitement de données doit assurer une transparence au transcodage et aux changements de débit, ainsi qu'une transparence aux routeurs et serveurs pour des raisons de confiance ; la méthode doit permettre l'accès aléatoire et d'autres traitements vidéo sans déchiffrage du flux complet, et doit permettre le transport par des protocoles prévus pour de la vidéo standard ;

b- l'efficacité de compression ne doit pas être dégradée du fait de la sécurisation des données par chiffrage ;

c- la sécurisation doit être compatible avec divers outils prévus par les standards de compression (MPEG4, H264) de données vidéo, en particulier la résistance aux erreurs, pour la transmission sans fil et les pertes de paquets IP (protocole Internet), ainsi que le codage multi niveaux, pour les terminaux clients à bande passante hétérogène ;

d- le niveau de sécurité et de masquage visuel doit être adapté à l'application: robustesse aux attaques spécifiques à la vidéo ;

e- la puissance de calcul requise doit rester compatible avec des terminaux embarqués, pour des applications telles que la transmission sans fil en flux continu ("streaming") de documents multimédias.

Selon la norme MPEG, une séquence vidéo est constituée d'une suite de groupes d'images, chaque groupe d'image consistant en une suite d'images de type I (intrinsèque), P (prédite) et B (bidirectionnelle) ; chaque image de type I est découpée en macroblocs ; chaque macro bloc est converti en quatre blocs de luminance et en deux blocs de chrominance, cette conversion entraînant une première perte d'information.

Chaque bloc de 64 pixels est converti en une table de 64 coefficients par une transformation DCT ("discrete cosine transform") ; cette table est compressée par quantification ("quantization") puis ordonnée et codée ("zig-zag ordering" et "run-length coding") en fonction du nombre de coefficients de valeur nulle rencontrés lors d'un balayage en zig-zag de la table; les données compressées résultantes sont codées en mots de longueur variable ("Huffman coding") ; ces transformations entraînent également une perte d'information.

Diverses méthodes de chiffrement d'un flux de données vidéo standardisé - en particulier d'un flux au standard MPEG - ont été proposées en vue de satisfaire certaines des contraintes énoncées ci avant.

Lorsque l'on chiffre entièrement un mot codé ("codeword") faisant partie d'une table de mots codés de différentes longueurs, il en résulte généralement un codeword qui n'appartient pas à cette table (mot "non conforme") ; par conséquent, un décodeur qui analyse les codewords bit à bit et prend des décisions à chaque bit, ne pourra pas reconnaître la frontière du codeword chiffré, se "perdra" et ne saura plus quel champ de données il est en train d'analyser ; cet inconvénient provient du fait que les codewords sont de longueur variable.

Le document "A fast MPEG video encryption algorithm", Changgui Shi et al, ACM Multimedia 98, décrit une méthode de chiffrement de données vidéo compressées au format MPEG, par une clé secrète ; les bits de signe des coefficients (AC et DC) de Huffman - qui sont des mots codés de longueur variable - sont "XORés" bit à bit avec une clé de longueur déterminée (c'est-à-dire combinés bit à bit avec les bits de la clé au moyen de portes logiques XOR, soit OU EXCLUSIF), et sont respectivement remplacés - dans le flux de données vidéo - par la valeur de bit résultant de cette opération ; dans ce document, il est proposé d'utiliser une ou plusieurs clé(s) longues ; une clé de 128 bits est utilisée à titre d'exemple.

Selon ce document, on chiffre seulement les bits de signe des codewords, et seulement pour les codewords qui représentent des données utiles (vecteurs de mouvement et coefficients DCT représentant la texture), ce qui résulte en un codeword conforme. Si l'on chiffrait les codewords représentant autre chose, comme par exemple le nombre de blocs codés, même en obtenant après chiffrage des codewords conformes, le décodeur se perdrait.

Cette méthode de chiffrage sélectif, qui opère sur une faible partie du flux de données, nécessite des ressources de calcul moindres que celles nécessitées par les méthodes de chiffrage intégral du flux ; en contrepartie, l'obscurcissement des images chiffrées est relativement faible.

Selon le document Changgui Shi et al, susmentionné, des points de synchronisation, qui sont ajoutés au flux de données, permettent à un décodeur disposant de la clé de savoir à partir de quelle position dans le flux chiffré, il doit recommencer à utiliser la clé de déchiffrage ; ces points de synchronisation sont ajoutés au début de chaque groupe d'images, au début de chaque image de type I ou au début d'un nombre prédéterminé d'images.

L'annexe E de la norme ISO 14496-2 définit plusieurs outils ou modes utiles pour minimiser les conséquences négatives d'erreurs dans la transmission d'un flux de données compressées : i) les marques de synchronisation ; ii) la séparation entre les données de texture d'une part, les données d'en-tête et de mouvement d'autre part ; iii) l'utilisation de codes de longueur variable réversibles pour le codage des données de texture.

Dans un mode "video packet synchronisation", une marque de synchronisation périodique peut être créée à la fin d'un macrobloc lorsque le nombre de bits depuis la marque précédente est supérieur à un certain seuil ; un paquet vidéo (partie du flux comprise entre deux marques successives) présente ainsi un nombre variable de macro blocs.

Lorsque le flux de données est partiellement chiffré avec un algorithme de chiffrement par bloc, tel que les standards DES (bloc de 64 bits) et à fortiori AES (128 bits), le nombre de bits de données à chiffrer à l'intérieur d'un tel paquet vidéo, peut être inférieur au nombre de bits du bloc de chiffrage, notamment lorsque le paquet contient les vecteurs de mouvement associés aux images de type P et B; un tel paquet sera dans ce cas transmis sans chiffrement, et l'obscurcissement de la séquence sera diminué.

Le brevet US-6,505,299-B1 (Zeng et al) décrit différentes méthodes de chiffrage de données vidéo quantifiées (partiellement compressées) avant leur codage par des tables de Huffman, par encodage RLE, codage arithmétique ou autre codage d'entropie : une transformation espace-fréquence est appliquée à l'image, ce qui génère une carte de coefficients de transformation ; ces coefficients sont ensuite chiffrés, soit par brouillage de leurs bit de signe, soit par brouillage de leurs bits les moins significatifs, soit par mélange de blocs de la carte, soit par mélange de coefficients correspondant à une bande de fréquence spatiale de la carte.

Ce document propose par ailleurs de chiffrer les vecteurs de mouvement des images de type P et B ; ceci augmente l'obscurcissement des images chiffrées.

Un inconvénient de ces méthodes de chiffrage est qu'elles réduisent l'efficacité de la compression des données obtenue par quantification ; un autre inconvénient est qu'elles nécessitent des moyens de calcul plus importants que ceux nécessaires à un chiffrage après codage de Huffman ou équivalent.

La demande de brevet US-2002/0018565 (Luttrell et al) décrit une méthode de chiffrage sélectif d'un flux de données MPEG4 préservant la syntaxe de codage ; selon cette méthode, on chiffre les index (de longueur fixe égale à n) d'une table de $2^n$ mots de longueur variable, et on remplace, pour chaque index de la table, le mot (en clair) correspondant à cet index par le mot (en clair) correspondant à l'index chiffré ; cette méthode ne permet pas de conserver la relation de la table en clair entre la longueur d'un mot codé et la fréquence d'apparition du symbole correspondant dans un flux de données ; elle dégrade par conséquent la compression de données par codage à l'aide de la table chiffrée.

Certaines des méthodes connues de chiffrage d'un flux de données vidéo sont insensibles à la perte d'un paquet de données ; par contre, ces méthodes sont sensibles à la perte isolée d'un ou plusieurs bits de données, ce qui se produit fréquemment dans les systèmes de transmission sans fil notamment.

Par ailleurs, ces méthodes connues sont incompatibles avec les méthodes d'adaptation du flux à une bande passante variable prévues par la norme MPEG4FGS ("fine granularity scalability", MPEG-4 Video Verification Model version 18.0, January 2001), dans lesquelles, pour adapter un flux de données à un canal de transmission de bande passante réduite, on tronque le flux de données à des positions arbitraires, dès que le nombre de bits alloués au canal est atteint, au milieu d'une image par exemple.

La présente invention a pour objet de proposer une méthode améliorée de chiffrage d'un flux standardisé de données compressées.

La présente invention a également pour objet de proposer une telle méthode qui remédie - en partie au moins - aux inconvénients des méthodes connues de chiffrage de flux de données audio et vidéo compressées.

Au sens de la présente demande, les termes et expressions "mot codé", "mot de code" et "codeword" sont employés indifféremment pour désigner un mot d'une table de mots de différentes longueurs.

L'invention est définie par les revendications.

Elle concerne le chiffrage d'un flux standardisé de données audio ou video compressées, dans laquelle on chiffre par un flux pseudo aléatoire au moins une partie des bits d'un paquet de données délimité par deux marques de synchronisation successives.

Le chiffrement par flux s'effectuant bit à bit, la position dans un paquet de données chiffrées d'un bit chiffré est la même que celle qu'occupait le bit de données correspondant dans le paquet de données, avant chiffrage ; en outre, l'état d'un bit chiffré (ou respectivement non chiffré) n'influence pas les bits voisins ; cette méthode de chiffrement est compatible avec les variations du nombre de bits à chiffrer, d'un paquet à un autre paquet ; aucun bit de donnée à chiffrer n'est donc laissé en clair ; en outre, le déchiffrement d'un paquet chiffré par flux peut être fait à rebours en partant de la marque de synchronisation initiale du paquet suivant; l'invention permet d'éviter que le chiffrement ne propage des erreurs isolées causées par la transmission et affectant seulement un ou plusieurs bits à l'intérieur d'un paquet de données chiffrées, ce que ne permet pas un chiffrement par bloc ; l'invention permet également de déchiffrer un paquet tronqué pour adapter le flux à une bande passante réduite.

Pour prévenir les tentatives de déchiffrement frauduleux, on utilise un flux pseudo aléatoire différent (unique) pour chaque paquet du flux de données : à chaque marque de synchronisation du flux de données, on génère un nouveau flux pseudo aléatoire que l'on "XORe" bit à bit avec les bits de données à chiffrer (c'est à dire que l'on applique à des portes "OU" exclusif), et on replace dans le flux les bits de données chiffrés à la place qu'ils occupaient respectivement avant chiffrage.

De préférence, on génère un flux de chiffrage d'un paquet déterminé par traitement d'une donnée non chiffrée du paquet déterminé, dite seconde donnée non chiffrée, par traitement d'une donnée non chiffrée du flux de données n'appartenant pas au paquet déterminé, dite première donnée non chiffrée, et par traitement d'une clé unique secrète et de préférence caractéristique du flux.

De préférence encore, la donnée non chiffrée du paquet déterminé est une donnée d'entête du paquet, et la donnée non chiffrée du flux de données n'appartenant pas au paquet déterminé, est une marque temporelle du flux ou "time stamp".

Selon un mode préféré de mise en oeuvre, pour générer un flux pseudo aléatoire unique (différent des autres flux pseudo aléatoires) pour chaque paquet du flux de données, on utilise une ou plusieurs données d'entête du paquet et/ou du flux de données considéré, en particulier une marque temporelle ("time stamp") du groupe d'images dont fait partie le paquet considéré, qui peu(ven)t être associée(s) à un index tel que l'index du premier macrobloc du paquet considéré, pour former une combinaison de données qui est spécifique au paquet considéré.

De préférence, en outre, on chiffre par bloc, à l'aide d'une clé secrète, les première et seconde données non chiffrées ; à cet effet, on utilise de préférence un algorithme de chiffrement par bloc de 64 bits, de 128 bits, de 192 bits, ou de 256 bits pour générer, pour chaque paquet de données, un flux pseudo aléatoire à partir d'une clé et de données caractéristiques du paquet considéré.

Afin d'augmenter le niveau de résistance du chiffrage à des "attaques" (tentatives frauduleuses de déchiffrage) utilisant la connaissance de portions non chiffrées (en clair) du flux de données, on utilise en outre de préférence un algorithme de hachage pour produire le flux de chiffrage des données du paquet déterminé, à partir du résultat du chiffrement par bloc des première et seconde données non chiffrées.

Lorsque, comme c'est le cas pour la norme MPEG4, une partie au moins des données du flux ont été codées en des mots de longueur variable, on ne chiffre que les bits de ces mots codés qui, après chiffrement et replacement dans le mot codé, respectent la structure de mots codés du flux de données à chiffrer ; de préférence, à cet effet, pour des mots codés d'une table de mots codés ne présentant pas tous la même longueur, on chiffre, de préférence pour chaque mot codé de la table, au moins une partie des bits - et de préférence tous les bits - qui, après changement aléatoire de leur(s) valeur(s) et après remplacement bit à bit dans le mot codé à chiffrer des bits non chiffrés par les bits chiffrés, aboutit à la formation d'un second mot codé de la table de mots codés; la longueur du mot codé est ainsi invariante lors de ce chiffrage ; en d'autres termes, on mélange (on permute) les mots codés d'au moins un groupe de plusieurs mots codés (et de préférence de tous les groupes de plusieurs mots codés) de la table qui présentent la même longueur.

Selon un mode préférentiel de réalisation de l'invention, on ajoute à la table de mots codés de différentes longueurs, un index d'identification de chaque mot codé de la table, ainsi qu'au moins un paramètre définissant, pour chaque mot codé de la table, le nombre - et éventuellement la position dans le mot codé - du ou des bit (s) à chiffrer.

Pour chiffrer une suite de mots codés d'un paquet du flux de données, on détermine pour chaque mot codé, à l'aide de cette table, le nombre et la position des bits à chiffrer du mot ; on extrait du mot le(s) bit(s) à chiffrer et on le (s) place dans un tampon en concaténant dans ce tampon les bits à chiffrer extraits des mots codés de la suite des mots codés ; lorsque ce tampon est plein ou lorsqu'une marque de synchronisation de début du paquet suivant est atteinte, on chiffre la chaîne de bits présents dans le tampon et on replace chacun des bits chiffrés à la place qu'ils occupaient respectivement avant chiffrage dans le mot codé correspondant de la suite de mots codés du paquet; on obtient ainsi après chiffrage, un flux de données conforme au standard de compression.

Pour déchiffrer une suite de mots codés ainsi chiffrés, on effectue les opérations inverses : on extrait de chaque mot du flux les bits chiffrés que l'on place dans un tampon; lorsque ce tampon est plein ou lorsqu'une marque de synchronisation du paquet suivant est atteinte, on déchiffre la série de bits qu'il contient, puis on remplace dans le flux respectivement chaque bit chiffré extrait par le bit déchiffré de même position dans le tampon ; on vide ensuite le tampon avant de traiter de la même façon les mots du paquet suivant.

Alternativement, on chiffre en continu ("au fil de l'eau") chaque bit à chiffrer du flux de données, après l'avoir extrait du flux, à l'aide d'une opération XOR avec le bit correspondant d'un bloc du flux pseudo aléatoire de chiffrement, puis on le remet à la place qu'il occupait précédemment dans le flux de données. Le suivi, dans le bloc du flux pseudo aléatoire de chiffrement, du numéro du bit à utiliser pour le XOR, peut être effectué avec un compteur qui est incrémenté à chaque nouveau bit chiffré. Cette méthode supprime le besoin de stocker les bits à chiffrer dans un tampon, ainsi que le reste du paquet en attente des bits manquants ; elle réduit donc à la fois le coût en mémoire et les délais de traitement induits par ces mémorisations.

Les avantages de cette méthode de chiffrement continu par flux pseudo aléatoire sont particulièrement importants pour le déchiffrage, qui a généralement lieu sur des plateformes matérielles dont la capacité de calcul et la mémoire sont restreintes.

Pour déchiffrer un flux de données chiffré avec cette méthode, on opère de la même façon que pour le chiffrage : on déchiffre continûment ("au fil de l'eau") chaque bit à déchiffrer du flux de données chiffrées, après l'avoir extrait du flux, à l'aide d'une opération XOR avec le bit correspondant du bloc pseudo aléatoire de déchiffrement

Selon un autre aspect, l'invention propose un support lisible par un ordinateur sur lequel est enregistré un code de programme mettant en oeuvre les opérations définies ci avant, pour permettre à l'ordinateur de chiffrer un flux de données compressées, ou inversement de déchiffrer un flux de données compressées chiffrées conformément à l'invention.

L'invention permet de chiffrer des flux de données codées avec des mots de code de longueur variable, réversibles ou non, signés ou non signés, en préservant la syntaxe de codage du flux.

L'invention permet également, dans le cas de tables de mots codés signés, d'obtenir un brouillage plus complet des données (images ou sons en particulier), par comparaison avec les méthodes chiffrant seulement le bit de signe.

Selon un autre aspect, l'invention propose un codeur (ou un décodeur) comme défini par la revendication 17.

D'autres caractéristiques et avantages de l'invention apparaissent dans la description suivante, qui se réfère aux dessins annexés, et qui illustre sans aucun caractère limitatif des modes préférés et exemples de réalisation de l'invention.

Les figures 1a et 1b représentent une table utilisée conformément à l'invention, qui incorpore la table B-12 de l'annexe B de la norme MPEG4 (ISO 14496-2) ainsi qu'une colonne d'index respectivement associés à chaque mot, et qu'une colonne de paramètres indiquant le nombre de bits chiffrables de chaque mot.

La figure 2 est une partie de la table B-23 de l'annexe B de cette norme.

La figure 3 est un schéma illustrant le chiffrage d'une suite de mots d'un paquet d'un flux de données, conformément à l'invention.

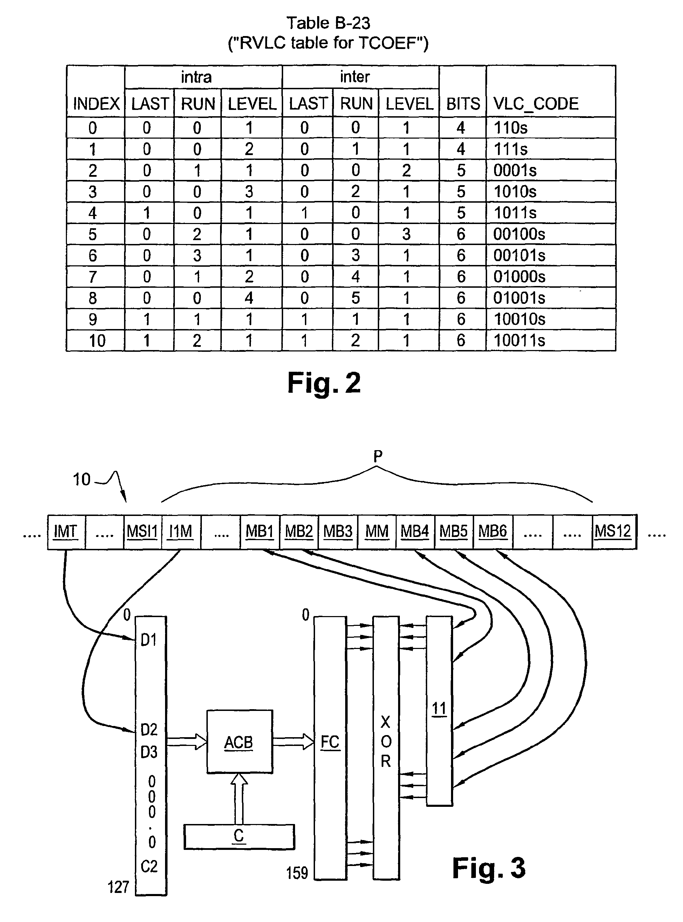

Par référence à la figure 3, les bits chiffrables de la partie codée en RVLC ("reversible variable length coding") d'un paquet MPEG4 sont chiffrés non avec un chiffrement par bloc, mais par flux ("stream cipher") FC, ce qui laisse les bits chiffrés en place. Ceci permet d'éviter que le chiffrement propage des erreurs aléatoires causées par la transmission (type "wireless").

Le paquet P comporte une série de macroblocs MB1, ..., MB3 de données de mouvement, une marque de séparation MM, suivis d'une série de macroblocs MB4, ..., MB6,... de données de texture.

A chaque marque de synchronisation initiale MSI1 d'un paquet P du flux 10 de données vidéo, on génère un nouveau flux pseudo aléatoire FC qui est utilisé par XOR bit à bit avec chacun des bits de données utiles à chiffrer qui ont été préalablement extraits du flux 10 et placés dans un registre ou tampon 11. Les bits ainsi chiffrés sont ensuite remis à leur place ; on ne chiffre que les bits qui permettent de garder la conformité à la norme de compression, c'est à dire les bits de signe et quelques bits additionnels, comme décrit ci après.

Pour assurer la sécurité, alors que le chiffrage par blocs est réputé plus sûr, il faut que chaque flux pseudo aléatoire de chiffrage des paquets tels que P (limité par deux marques de synchronisation MSI1 et MSI2 successives) soit unique.

Pour assurer la tolérance d'erreur, il faut que le flux pseudo aléatoire FC puisse être transmis secrètement du codeur au décodeur, et sans erreur, même si le flux 10 de données vidéo est sujet à des erreurs.

Pour assurer l'adaptabilité à la bande passante variable, il faut que, si seul le début du paquet P chiffré est reçu, le début du paquet P puisse néanmoins être déchiffré. Cela est assuré par le fait que chaque bit chiffré est indépendant des autres bits chiffrés, et est situé à la place du bit clair correspondant.

Le flux pseudo aléatoire est généré par une clef unique C, liée par exemple au document vidéo à chiffrer, et par des données qui changent souvent, qui sont protégées des erreurs, et ne se reproduisent jamais ; dans un flux MPEG, après les marques de début d'image ("VOP start code") telles que IMT (figure 3), il existe généralement une marque temporelle ou "time stamp" : dans un même film, la marque temporelle n'est jamais la même ; un flux de chiffrage calculé à partir de ces marques ne se répétera donc jamais ; dans un autre film ou flux de données, on pourra retrouver les mêmes marques temporelles mais, la clef C du document étant différente, les flux de chiffrage FC seront différents.

La clef est transmise au décodeur indépendamment du flux, par exemple par un protocole à clef publique. Si une marque temporelle IMT n'est présente qu'au début de chaque image (ou "video object plane"), on peut assembler la donnée D1 correspondant à cette marque avec une seconde donnée D2 telle que l'index I1M de premier macrobloc du paquet vidéo P à chiffrer. Cet assemblage est ainsi unique dans tout le film.

Pour assembler la clef C et les données D1 et D2 de manière à générer un flux pseudo aléatoire. FC très différent d'un autre flux pseudo aléatoire généré avec la même clef et une donnée D1 (marque temporelle) très peu différente de la première marque temporelle du paquet précédent, on chiffre les données combinées D1 et D2 (complémentées à 64 ou 128 bits par exemple par des "0") avec un algorithme de chiffrage par bloc ACB tel que DES, la clef C étant la clef secrète unique pour l'ensemble des paquets du flux. Le résultat est passé dans un algorithme de hachage (tel que le standard SHA1), qui a pour but d'une part de donner en sortie un message FC de longueur fixe, par exemple 160 bits pour SHA1, et d'autre part de donner un message très différent en sortie si l'entrée varie peu, même d'un seul bit.

Un tel algorithme SHA1 délivre en sortie 160 bits utilisés par XOR avec les bits utiles à chiffrer. Si entre deux marques de synchronisation successives (telles que MSI1 et MSI2 pour le paquet P), il y a moins de 160 bits à chiffrer, on n'utilisera que les premiers bits de la sortie de SHA1 ; s'il y en a au contraire plus de 160, il suffit de générer un autre bloc de flux de chiffrage FC de 160 bits, à l'aide de la clef unique C, des même données D1 et D2, et d'un index D3 que l'on incrémente ; ainsi, dans le cas où un seul bloc du flux de chiffrage FC n'est pas suffisamment grand pour chiffrer tous les bits du paquet P considéré, on génère un ou plusieurs blocs FC supplémentaires, dont le dernier peut ne pas être utilisé entièrement. Pour assurer l'unicité de chaque bloc du flux de chiffrage, on ajoute un index supplémentaire D3 dans le bloc d'entrée que l'on incrémente à chaque nouveau bloc du flux de chiffrage utilisé pour un paquet déterminé.

Ainsi, on peut obtenir le flux de chiffrage FC des bits de données du paquet vidéo par l'une des formules :

```
FC      =      SHA1(DESclef      unique((marque
temporelle)&  index  &  [complément  à  64 .
bits])),
```

ou bien

```
FC      =      SHA1(AESclef      unique((marque
temporelle)&  index  &  [complément  à  128
bits])),
```

suivant que l'on utilise un chiffrage DES ou AES pour produire le flux de chiffrage FC.

Il est possible d'utiliser des variantes de cette méthode combinant une clef unique et une marque temporelle.

Pour obtenir un flux de chiffrage composé d'une suite de blocs de taille fixe, on peut utiliser divers algorithmes de chiffrage symétrique par bloc tels que "twofish", "serpent", ou les variantes d'AES à 192 ou 256 bits pour les données et/ou la clef.

Pour diminuer la prédictabilité des données d'entrée de l'algorithme ACB de chiffrage par bloc utilisé pour produire le flux de chiffrage, on peut inclure une seconde clé (C2 figure 3) dans ces données d'entrée ; cette clef peut être changée pour chaque flux de données (tel qu'un film) à chiffrer, ou bien peut être changée à intervalles de temps réguliers (toutes les minutes ou secondes par exemple) pour un flux de données (film) déterminé, afin d'augmenter le niveau de sécurité ; cette seconde clef peut être transmise séparément du flux de données, en provoquant un accroissement minime du débit de données à transmettre, ou bien peut être calculée par un algorithme pseudo aléatoire connu du décodeur, à partir de la première clef (ou clef principale).

S'il y a des erreurs de transmission du flux de données 10, le flux pseudo aléatoire FC peut être régénéré par le décodeur, de la même façon que décrit ci avant pour le chiffrage, à condition que les données en clair D1 et D2 n'aient pas été affectées par les erreurs (la clef principale C étant transmise au décodeur séparément du flux 10) ; cela sera généralement le cas, étant donné qu'une marque temporelle représente une vingtaine de bits par paquet, alors que les données utiles d'un paquet peuvent représenter plusieurs milliers de bits.

Cette méthode est donc compatible avec les outils de la norme MPEG4 permettant de remédier aux erreurs de paquets et aux erreurs isolées.

L'utilisation d'une fonction de hachage pour produire chaque bloc du flux de chiffrage permet d'augmenter le niveau de résistance du chiffrage aux attaques basées sur la connaissance de portions non chiffrées du flux de données.

De telles portions non chiffrées peuvent être constituées par une ou plusieurs images entièrement noires, ou bien par une ou plusieurs images portant la marque du producteur d'un film vidéo, telles que celles généralement présentes dans le générique d'un film ; la connaissance de ces images non chiffrées et des données chiffrées correspondantes du flux permet à un "attaquant" de déterminer plusieurs blocs du flux de chiffrage, en appliquant les données chiffrées et les données non chiffrées correspondantes aux entrées de portes "OU "exclusif ; si ces blocs n'ont pas subi un hachage, il est alors possible de déterminer tout ou partie de la clé ; à contrario, grâce à la propriété de diffusion des algorithmes de hachage, il est difficile - voire impossible - de déterminer la clé à partir de la connaissance de blocs du flux de chiffrage, dès lors que ces blocs ont été hachés.

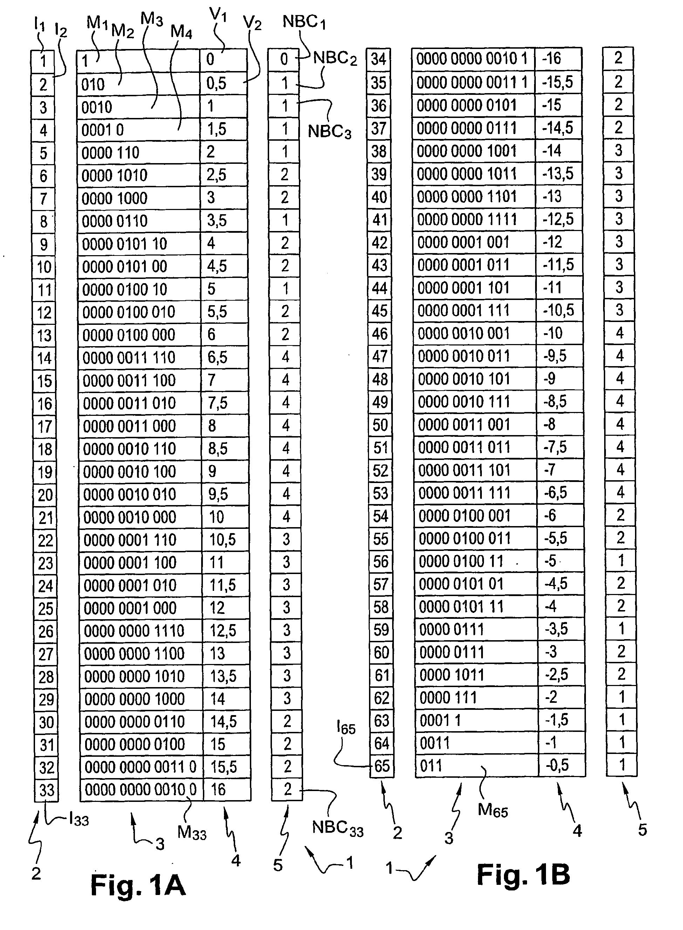

La sélection des bits de données utiles à chiffrer, qui sont extraits des macro blocs MB1 à MB3 de données de mouvement et des macro blocs MB4 à MB6 (et suivants) de données de texture, est maintenant décrite par référence aux figures 1a, 1b et 2.

L'exemple suivant, décrit par référence aux figures 1a et 1b, porte sur la table B-12 de codewords pour le codage des vecteurs de mouvement.

Par référence aux figures 1a et 1b, la table 1 comporte quatre colonnes 4, 3, 2, 5 comportant respectivement :

- des valeurs V, en l'occurrence des valeurs de différences de vecteurs de mouvement, telles que V1 et V2 ;
- des mots codés M respectivement associés aux différentes valeurs V à coder, tels que M1, M2, M3, M4, M33, M65 ;
- des index I allant de 1 à 65 pour identifier respectivement chaque mot M de la table, tels que I1, I2, I33, I65 ;
- des paramètres NBC respectivement associés à chaque mot M de la table, tels que NBC1, NBC2, NBC3, NBC33, pour définir le nombre de bit du mot considéré dont le remplacement par le bit complémentaire produit un autre mot de la table 1.

On voit sur cette figure que la plupart des mots codés M de huit bits au moins comportent un nombre NBC de bits chiffrables égal à deux, trois ou quatre ; en particulier, dans le groupe des quatre mots codés de treize bits, dont fait partie le mot M33, deux bits de chaque mot peuvent être complémentés (inversés).

Comme décrit ci avant, les bits chiffrables de cette table sont les bits groupés à droite de chaque mot codé ; si tel n'est pas le cas, la table doit contenir en outre, pour chaque mot codé M, l'information de position de chaque bit chiffrable de ce mot.

Pour chiffrer une suite de mots M codés formant un des macroblocs MB1, ..., MB3 de données de mouvement du paquet de données, on lit dans la table 1 le nombre NBC de bits chiffrables du 1er mot M ; on transfère les bits chiffrables du mot M dans le tampon 11 (figure 3); on répète l'opération pour les mots suivants du flux 10 à chiffrer, et on concatène au fur et à mesure les bits chiffrables extraits de ces mots dans le tampon 11, jusqu'au remplissage de celui-ci ou jusqu'à la fin du paquet ; à ce moment on chiffre les bits du tampon 11 en les présentant, ainsi que le flux FC de chiffrage aux entrées de 160 portes "OU exclusif"; les bits chiffrés délivrés en sortie sont replacés - bit à bit - dans le flux de mots, aux positions respectives des bits extraits du flux 10, de façon à former un flux chiffré.

Alternativement, on peut chiffrer les bits chiffrables en continu ("au fil de l'eau"), tel que décrit ci avant.

Pour déchiffrer un paquet -ou une portion d'un paquet tronqué - d'un flux de données chiffré selon l'invention, l'analyse du flux est faite de gauche à droite ; quand un mot de code est analysé par un décodeur MPEG, une décision est prise à chaque bit ; après lecture du dernier bit non chiffré d'un mot chiffré, le décodeur détermine le groupe de mots chiffrés de la table correspondant aux bits non chiffrés déjà lu et détermine en conséquence le nombre de bits chiffrés suivant le dernier bit "en clair"; lorsque, par exemple, la séquence de bits "en clair" est "000010" , la lecture de la table 1 permet de déterminer que le mot chiffré comporte deux bits chiffrés, qui suivent ces bits non chiffrés.

Le traitement de ces bits est alors identique à celui utilisé pour le chiffrage : les bits à déchiffrer sont concaténés dans un tampon, jusqu'à son remplissage ou la fin du paquet; le contenu du tampon peut être appliqué bit à bit aux entrées de portes XOR avec un flux de déchiffrage généré de la même façon qu'indiqué précédemment pour le chiffrage; les bits déchiffrés sur les sorties des portes sont replacés dans le flux à déchiffrer, bit à bit, aux positions qu'occupaient les bits chiffrés.

Un traitement de données identique ou similaire à celui qui vient d'être décrit peut être utilisé pour les données compressées par les mots codés réversibles de la table B-23 dont les 11 premiers codes apparaissent figure 2 : sur un fond gris foncé apparaissent les bits de signe, que l'on peut chiffrer ; sur un fond gris clair apparaissent ceux qu'on peut aussi chiffrer conformément à la méthode décrite ci-dessus pour la table B-12.

## Revendications

1. Méthode de chiffrage d'un flux (10) standardisé de données audio ou vidéo compressées, comprenant le chiffrage par flux pseudo aléatoire (FC) d'au moins une partie des bits de paquets (P) de données délimités par deux marques de synchronisation (MSI1, MSI2) consécutives,
   **caractérisée en ce qu'**elle comprend :

   - la production d'au moins un bloc du flux pseudo aléatoire de chiffrage différent pour chaque paquet (P) du flux de données, en générant un nouveau flux pseudo aléatoire (FC) de chiffrage à chaque marque de synchronisation initiale (MSI1, MSI2) d'un paquet de données,

- l'application bit à bit du flux de chiffrage avec les bits de données à chiffrer au moyen d'une fonction "OU" exclusif, pour obtenir des bits de données chiffrés, et
- le remplacement dans le flux de données (10) des bits de données non chiffrés par les bits de données chiffrés à la place qu'ils occupaient respectivement avant chiffrage,

et **en ce que** le flux de chiffrage (FC) d'un paquet (P) de données est généré par traitement de données (D1, D2) non chiffrées du flux de données.

2. Méthode selon la revendication 1, appliquée au chiffrage de données compressées qui sont en partie codées par des tables (1) de mots codés de longueur variable réversibles et de mots codés de longueur variable non réversibles, qui sont signés ou non signés.

3. Méthode selon l'une des revendications 1 et 2, dans laquelle au moins un bloc du flux de chiffrage (FC) est produit en chiffrant au moins une donnée (D1, D2) non chiffrée du flux de données (10) au moyen d'un algorithme de chiffrage symétrique par bloc, puis en appliquant un algorithme de hachage au résultat du chiffrement par bloc de la donnée (D1, D2).

4. Méthode selon l'une des revendications 1 à 3, appliquée au chiffrage d'un flux de données transmis sous forme tronquée dans un canal à bande passante réduite.

5. Méthode selon l'une des revendications 1 à 4, comprenant la production de plusieurs blocs de flux pseudo aléatoire de chiffrage pour un paquet déterminé, qui se différencient par au moins un index (D3).

6. Méthode selon l'une des revendications 1 à 5 dans laquelle la production du flux de chiffrage (FC) d'un paquet (P) de données comprend le traitement d'une donnée (D2) non chiffrée du paquet (P) de données considéré, en utilisant une clé (C) secrète, de préférence unique et caractéristique du flux de données.

7. Méthode selon l'une des revendications 1 à 6, dans laquelle la production du flux de chiffrage (FC) d'un paquet (P) de données comprend le traitement d'une donnée (D1) non chiffrée n'appartenant pas au paquet considéré, en utilisant une clé (C) secrète, de préférence unique et caractéristique du flux de données.

8. Méthode selon les revendications 6 et 7, dans laquelle la donnée (D2) non chiffrée du paquet considéré est une donnée d'en-tête du paquet, et dans laquelle la donnée (D1) non chiffrée du flux de données n'appartenant pas au paquet considéré est une marque temporelle d'une partie du flux incluant le paquet considéré, dite "time stamp".

9. Méthode selon les revendications 6 et 7 ou 8, dans lequel la production du flux de chiffrage des données d'un paquet déterminé comprend le chiffrage par bloc des données non chiffrées à l'aide d'une clé (C).

10. Méthode selon la revendication 9, dans lequel la production du flux de chiffrage des données d'un paquet déterminé comprend l'utilisation d'un algorithme de hachage pour produire le flux de chiffrage (FC) à partir du résultat du chiffrement par bloc des données non chiffrées.

11. Méthode selon l'une des revendications 7 à 10 dans laquelle on combine aux données (D1, D2) une seconde clé (C2) calculée à partir de la première clé (C) par un algorithme pseudo aléatoire.

12. Méthode selon l'une des revendications 1 à 11, dans laquelle on chiffre tous les bits du paquet qui, après changement aléatoire de leur(s) valeur(s) et après remplacement bit à bit dans le mot codé à chiffrer des bits non chiffrés par les bits chiffrés, provoquent la formation d'un mot codé de la table de mots codés.

13. Méthode selon l'une des revendications 1 à 12 dans laquelle on ajoute à la table (1) de mots codés de différentes longueurs, un index (I) d'identification de chaque mot codé de la table, ainsi qu'au moins un paramètre (NBC) définissant, pour chaque mot codé de la table, le nombre et la position, dans le mot codé, du ou des bit (s) à chiffrer.

14. Méthode selon l'une des revendications 2 à 13 dans laquelle, pour chiffrer une suite de mots codés d'un paquet de données déterminé:

- on détermine pour chaque mot codé, à l'aide de la table, le nombre et la position des bits à chiffrer du mot ;
- on extrait du mot le(s) bit(s) à chiffrer et on le(s) place dans un tampon (11) en concaténant dans ce tampon les bits à chiffrer extraits des mots codés du paquet déterminé ;
- lorsque ce tampon (11) est plein ou lorsque tous les bits chiffrables ont été extraits du paquet de données déterminé, on chiffre la chaîne de bits présents dans le tampon par un flux de chiffrage (FC) unique et on replace chacun des bits chiffrés à la place qu'ils occupaient respectivement dans le paquet avant chiffrage.

**15.** Méthode selon l'une des revendications 1 à 14 dans laquelle on utilise un algorithme de chiffrement par bloc (ACB) de 64 bits, de 128 bits, de 192 bits, ou de 256 bits, pour générer un flux pseudo aléatoire de chiffrage (FC).

**16.** Flux compressé de données chiffrées obtenu indirectement par une méthode selon l'une des revendications 1 à 15.

**17.** Codeur ou décodeur d'un flux de données audio ou vidéo formatées et compressées pour la mise en oeuvre des opérations d'une méthode selon l'une quelconque des revendications 1 à 15, **caractérisé en ce qu'**il comporte :

- une table (1) de mots codés de différentes longueurs, la table comportant pour chaque mot un index (I) et un paramètre (NBC) définissant les bits du mot à chiffrer ou déchiffrer,
- des moyens (D1, D2, D3, C, C2, ACB, FC, XOR) de chiffrement ou déchiffrement par flux aptes à chiffrer ou déchiffrer lesdits bits en effectuant les opérations suivantes :

  - produire au moins un bloc du flux pseudo aléatoire de chiffrage différent pour chaque paquet (P) du flux de données, en générant un nouveau flux pseudo aléatoire (FC) de chiffrage à chaque marque de synchronisation initiale (MSI1, MSI2) d'un paquet de données,
  - appliquer bit à bit le flux de chiffrage avec les bits de données à chiffrer au moyen d'une fonction "OU" exclusif, pour obtenir des bits de données chiffrés ou déchiffrés, et
  - remplacer dans le flux de données (10) des bits de données non chiffrés, ou chiffrés, par les bits de données chiffrés, ou déchiffrés, à la place qu'ils occupaient respectivement avant chiffrage, ou le déchiffrage,

  le flux de chiffrage (FC) d'un paquet (P) de données étant généré par traitement de données (D1, D2) non chiffrées du flux de données.

**18.** Codeur ou décodeur MPEG4 selon la revendication 17, comportant en outre :

  - un tampon (11) prévu pour recevoir temporairement les bits de données sélectionnés en vue de leur (dé) chiffrage,
  - des moyens pour actionner les moyens de (dé)chiffrement par.flux, pour provoquer le (dé)chiffrement des bits stockés dans le tampon lorsque le tampon est plein ou lorsqu'une marque de synchronisation (MSI2) d'un paquet (P) de données suivant a été atteinte, pour remplacer les bits sélectionnés dans le flux dé données par les bits stockés et (dé)chiffrés, et pour vider le tampon.

**19.** Support lisible par un ordinateur, sur lequel est enregistré un code de programme mettant en oeuvre les opérations définies par l'une des revendications 1 à 15, pour permettre à l'ordinateur de chiffrer un flux de données compressées, ou inversement de déchiffrer un flux de données compressées chiffrées.

**Claims**

**1.** A method for encrypting a standardized flow (10) of compressed audio or video data, comprising the encryption by pseudo-random flow (FC) of at least one part of the bits of data packets (P) delimited by two consecutive timing marks (MSI1, MSI2),
**characterized in that** it comprises:

  - the production of at least one different block of the pseudo-random encryption flow for each packet (P) of the data flow, by generating a new pseudo-random encryption flow (FC) upon each initial timing mark (MSI1, MSI2) of a data packet,
  - the application, bit by bit, of the encryption flow with the data bits to be encrypted by means of an exclusive "OR" function, to obtain encrypted data bits, and
  - the replacement in the data flow (10) of the non-encrypted data bits with the encrypted data bits at the place they respectively occupied before encryption,

and **in that** the encryption flow (FC) for encrypting a data packet (P) is generated by processing non-encrypted data (D1, D2) of the data flow.

2. Method according to claim 1, applied to the encryption of compressed data that are partially encoded by tables (1) of reversible encoded words of variable length and of non-reversible encoded words of variable length, which are signed or non-signed.

3. Method according to one of claims 1 and 2, wherein at least one block of the encryption flow (FC) is produced by encrypting at least one non-encrypted datum (D1, D2) of the data flow (10) by means of a symmetrical block encryption algorithm, then by applying a hashing algorithm to the result of the block encryption of the datum (D1, D2).

4. Method according to one of claims 1 to 3, applied to the encryption of a data flow sent in truncated form in a reduced bandwidth channel.

5. Method according to one of claims 1 to 4, comprising the production of several blocks of pseudo-random encryption flow for a determined packet, which differ by at least one index (D3).

6. Method according to one of claims 1 to 5, wherein the production of the encryption flow (FC) for encrypting a data packet (P) comprises processing a non-encrypted datum (D2) of the data packet (P) considered, by using a secret key (C), which is preferably unique and characteristic of the data flow.

7. Method according to one of claims 1 to 6, wherein the production of the encryption flow (FC) for encrypting a data packet (P) comprises processing a non-encrypted datum (D1) which does not belong to the packet considered, by using a secret key (C), which is preferably unique and characteristic of the data flow.

8. Method according to claims 6 and 7, wherein the non-encrypted datum (D2) of the packet considered is a header datum of the packet, and wherein the non-encrypted datum (D1) of the data flow not belonging to the packet considered is a time mark of one part of the flow including the packet considered, called a "time stamp".

9. Method according to claims 6 and 7 or 8, wherein the production of the encryption flow for encrypting the data of a determined packet comprises block encrypting the non-encrypted data using a key (C).

10. Method according to claim 9, wherein the production of the encryption flow for encrypting the data of a determined packet comprises using a hashing algorithm to produce the encryption flow (FC) from the result of the block encryption of the non-encrypted data.

11. Method according to one of claims 7 to 10, wherein a second key (C2), calculated using the first key (C) by a pseudo-random algorithm, is combined with the data (D1, D2).

12. Method according to one of claims 1 to 11, wherein the bits encrypted are all the bits of the packet which, after random change of their value (s) and after replacement, bit by bit, in the encoded word to be encrypted of the non-encrypted bits with the encrypted bits, cause the formation of an encoded word in the table of encoded words.

13. Method according to one of claims 1 to 12, wherein an identification index (I) for identifying each encoded word in the table is added to the table (1) of encoded words of different lengths, as well as at least one parameter (NBC) defining, for each encoded word in the table, the number and the position, in the encoded word, of the bit or bit(s) to be encrypted.

14. Method according to one of claims 2 to 13, wherein to encrypt a series of encoded words of a determined data packet:

- for each encoded word, the number and the position of the bits to be encrypted in the word are determined using the table;
- the bit(s) to be encrypted are extracted from the word and placed in a buffer (11), the bits to be encrypted extracted from the encoded words of the determined packet being concatenated in this buffer;
- when this buffer (11) is full or when all the encryptable bits have been extracted from the determined data packet, the string of bits present in the buffer is encrypted by a unique encryption flow (FC) and each of the encrypted bits are put back at the place they respectively occupied in the packet before encryption.

15. Method according to one of claims 1 to 14, wherein a 64-bit, 128-bit, 192-bit or 256-bit block encryption algorithm (ACB) is used to generate a pseudo-random encryption flow (FC).

16. A compressed flow of encrypted data obtained indirectly by a method according to one of claims 1 to 15.

17. An encoder or decoder of a flow of audio or video data formatted and compressed for the implementation of the operations of a method according to any one of claims 1 to 15, **characterized in that** it comprises:

- a table (1) of encoded words of different lengths, the table comprising, for each word, an index (I) and a parameter (NBC) defining the bits of the word to be encrypted or decrypted,
- flow encryption or decryption means (D1, D2, D3, C, C2, ACB, FC, XOR) capable of encrypting or decrypting said bits by performing the following operations:

- producing at least one different block of the pseudo-random encryption flow for each packet (P) of the data flow, by generating a new pseudo-random encryption flow (FC) upon each initial timing mark (MSI1, MSI2) of a data packet,
- applying, bit by bit, the encryption flow with the data bits to be encrypted by means of an exclusive "OR" function, to obtain encrypted or decrypted data bits, and
- replacing, in the data flow (10), non-encrypted or encrypted data bits with the encrypted or non-encrypted data bits, at the place they respectively occupied before encryption or decryption,

the encryption flow (FC) for encrypting a data packet (P) being generated by processing non-encrypted data (D1, D2) of the data flow.

18. Encoder or decoder MPEG4 according to claim 17, further comprising:

- a buffer (11) provided for temporarily receiving the data bits selected with a view to their encryption/ decryption,
- means for activating the flow encryption/decryption means, to cause the encryption/decryption of the bits stored in the buffer when the buffer is full or when a timing mark (MSI2) of a next data packet (P) has been reached, to replace the bits selected in the data flow with the bits stored and encrypted/decrypted, and to empty the buffer.

19. A medium readable by a computer, on which a code is recorded of a program implementing the operations defined by one of claims 1 to 15, to enable the computer to encrypt a compressed data flow, or conversely to decrypt an encrypted compressed data flow.

**Patentansprüche**

1. Verfahren zum Verschlüsseln eines standardisierten Stroms (10) komprimierter Audio- oder Videodaten, das das Verschlüsseln durch Pseudozufallsstrom (FC) mindestens eines Teils der Bits von Datenpaketen (P) aufweist, die von zwei aufeinander folgenden Synchronisationszeichen (MSI1, MSI2) abgegrenzt sind, **dadurch gekennzeichnet, dass** es Folgendes aufweist:

- die Produktion mindestens eines Blocks des Verschlüsselungs-Pseudozufallsstroms, der für jedes Paket (P) des Datenstroms unterschiedlich ist, indem ein neuer Verschlüsselungs-Pseudozufallsstrom (FC) bei jedem ursprünglichen Synchronisationszeichen (MSI1, MSI2) eines Datenpakets erzeugt wird,
- das bitweise Anwenden des Verschlüsselungsstroms mit den zu verschlüsselnden Datenbits anhand einer Funktion exklusiv "oder", um verschlüsselte Datenbits zu erzielen, und
- das Ersetzen in dem Datenstrom (10) der nicht verschlüsselten Datenbits durch die verschlüsselten Datenbits an der Stelle, die sie jeweils vor dem Verschlüsseln einnahmen,

und **dadurch**, dass der Verschlüsselungsstrom (FC) eines Pakets (P) durch nicht verschlüsselte Datenverarbeitung (D1, D2) des Datenstroms erzeugt wird.

2. Verfahren nach Anspruch 1, angewandt an das Verschlüsseln komprimierter Daten, die zum Teil durch Tabellen (1) umkehrbarer codierter Wörter mit variabler Länge und nicht umkehrbarer codierter Wörter mit variabler Länge, die ein Vorzeichen haben oder nicht, codiert sind.

3. Verfahren nach einem der Ansprüche 1 und 2, bei dem zumindest ein Block des Verschlüsselungsstroms (FC) erzeugt wird, indem mindestens eine nicht verschlüsselte Information (D1, D2) des Datenstroms (10) mittels eines symmetrischen blockweisen Verschlüsselungsalgorithmus erzeugt wird, und dann durch Anwenden eines Hasch-Algorithmus an das Ergebnis des blockweisen Verschlüsselns der Information (D1, D2).

4. Verfahren nach einem der Ansprüche 1 bis 3, angewandt an das Verschlüsseln eines Datenstroms, der in abgeschnittener Form in einem Kanal mit verringertem Durchlassbereich übertragen wird.

5. Verfahren nach einem der Ansprüche 1 bis 4, das die Produktion mehrerer Blöcke von Verschlüsselungs-Pseudozufallsströmen für ein gegebenes Paket, die sich durch mindestens einen Index (D3) unterscheiden, aufweist.

6. Verfahren nach einem der Ansprüche 1 bis 5, beim dem die Produktion des Verschlüsselungsstroms (FC) eines Datenpakets (P) die Verarbeitung einer nicht verschlüsselten Information (D2) des betreffenden Datenpakets (P) unter Einsatz eines Geheimschlüssels (C), der vorzugsweise einzigartig und für den Datenstrom charakteristisch ist, aufweist.

7. Verfahren nach einem Ansprüche 1 bis 6, bei dem die Produktion des Verschlüsselungsstroms (FC) eines Datenpakets die Verarbeitung einer nicht verschlüsselten Information (D1) aufweist, die nicht zu dem betreffenden Paket gehört, indem ein vorzugsweise einzigartiger und für den Datenstrom charakteristischer Geheimschlüssel (C) verwendet wird.

8. Verfahren nach den Ansprüche 6 und 7, bei dem die nicht verschlüsselte Information (D2) des betreffenden Pakets eine Kopfteilinformation des Pakets ist, und bei dem die nicht verschlüsselte Information (D1) des Datenstroms, die nicht zum betreffenden Paket gehört, eine zeitliche Kennzeichnung, "time stamp" genannt, eines Teils des Stroms ist, der das betreffende Paket enthält.

9. Verfahren nach den Ansprüchen 6 und 7 oder 8, bei dem die Produktion des Verschlüsselungsstroms der Daten eines bestimmten Pakets das blockweise Verschlüsseln der Daten, die nicht mit einem Schlüssel (C) verschlüsselt sind, aufweist.

10. Verfahren nach Anspruch 9, bei dem die Produktion eines Verschlüsselungsstroms der Daten eines bestimmten Pakets den Einsatz eines Hasch-Algorithmus zum Erzeugen eines Verschlüsselungsstroms (FC) ausgehend von dem Ergebnis des blockweisen Verschlüsselns der nicht verschlüsselten Daten aufweist.

11. Verfahren nach einem der Ansprüche 7 bis 10, bei dem man mit den Daten (D1, D2) einen zweiten Schlüssel (C2) kombiniert, der ausgehend von dem ersten Schlüssel (C) durch einen Pseudozufallsalgorithmus berechnet wird.

12. Verfahren nach einem der Ansprüche 1 bis 11, bei dem man alle Bits des Pakets verschlüsselt, die nach dem Zufallswechsel ihres/ihrer Werts/Werte und nach dem bitweisen Ersetzen in dem zu verschlüsselten codierten Wort der nicht verschlüsselten Bits durch die verschlüsselten Bits das Bilden eines codierten Worts der Tabelle codierter Wörter bewirkt.

13. Verfahren nach einem der Ansprüche 1 bis 12, bei dem man zu der Tabelle (1) codierter Wörter mit verschiedenen Längen einen Index (I) zur Identifikation jedes codierten Worts der Tabelle sowie mindestens einen Parameter (NBC) hinzufügt, der für jedes codierte Wort der Tabelle die Anzahl und die Position des oder der zu verschlüsselten Bits in dem codierten Wort definiert.

14. Verfahren nach einem der Ansprüche 2 bis 13, bei dem man zum Verschlüsseln einer Folge codierter Wörter eines bestimmten Datenpakets:

- für jedes codierte Wort mit der Tabelle die Anzahl und die Position der zu verschlüsselnden Bits des Worts bestimmt,
- aus dem Wort das/die zu verschlüsselnde(n) Bit(s) extrahiert und es/sie in einen Pufferspeicher (11) gibt, indem man in diesem Pufferspeicher die zu verschlüsselnden Bits, die aus den codierten Wörtern des bestimmten Pakets extrahiert wurden, konkateniert,

- wenn dieser Pufferspeicher (11) voll ist, oder wenn alle verschlüsselbaren Bits aus dem bestimmten Datenpaket extrahiert wurden, die Kette von Bits, die in dem Pufferspeicher gegenwärtig ist, durch einen einzigartigen Verschlüsselungsstrom (FC) verschlüsselt und jedes der verschlüsselten Bits wieder an die Stelle gibt, das es jeweils vor dem Verschlüsseln in dem Paket belegte.

15. Verfahren nach einem der Ansprüche 1 bis 14, bei dem man einen blockweisen Verschlüsselungsalgorithmus (ACB) zu 64 Bits, 128 Bits, 192 Bits oder 256 Bits verwendet, um einen Verschlüsselungs-Pseudozufallsstrom (FC) zu erzeugen.

16. Komprimierter Strom verschlüsselter Daten, der indirekt durch ein Verfahren nach einem der Ansprüche 1 bis 15 erzielt wird.

17. Codierer oder Decodierer eines Stroms formatierter und komprimierter Audio- oder Videodaten zum Umsetzen der Operationen eines Verfahrens nach einem der Ansprüche 1 bis 15, **dadurch gekennzeichnet, dass** er Folgendes aufweist

- eine Tabelle (1) codierter Wörter mit verschiedenen Längen, wobei die Tabelle für jedes Wort einen Index (I) und einen Parameter (NBC) aufweist, die die Bits des zu verschlüsselnden oder entschlüsselnden Worts definieren,
- Mittel (D1, D2, D3, C, C2, ACB, FC, XOR) zum Verschlüsseln oder Entschlüsseln durch Ströme, die die Bits verschlüsseln oder entschlüsseln können, indem sie die folgenden Operationen ausführen:

- Erzeugen mindestens eines Blocks des Verschlüsselungs-Pseudozufallsstroms, der für jedes Paket (P) des Datenstroms unterschiedlich ist, indem ein neuer Verschlüsselungs-Pseudozufallsstrom (FC) bei jedem ursprünglichen Synchronisationszeichen (MSI1, MSI2) eines Datenpakets erzeugt wird,
- bitweises Anwenden des Verschlüsselungsstroms mit den zu verschlüsselnden Datenbits mittels einer exklusiv-"ODER"-Funktion, um verschlüsselte oder entschlüsselte Datenbits zu erzielen, und
- Ersetzen der nicht verschlüsselten oder verschlüsselten Datenbits in dem Datenstrom (10) durch verschlüsselte oder entschlüsselte Datenbits an der Stelle, die sie jeweils vor dem Verschlüsseln oder Entschlüsseln belegten,

wobei der Verschlüsselungsstrom (FC) eines Datenpakets (P) durch Verarbeiten nicht verschlüsselter Daten (D1, D2) des Datenstroms erzeugt wird.

18. MPEG4-Codierer oder -Decodierer nach Anspruch 17, der ferner Folgendes aufweist:

- einen Pufferspeicher (11), der dazu vorgesehen ist, vorübergehend die für ihr Ver(Ent)schlüsseln ausgewählten Datenbits aufzunehmen,
- Mittel zum Aktivieren der Ver(Ent)schlüsselungsmittel durch Strom, um das Ver(Ent)schlüsseln der Bits zu bewirken, die in dem Zwischenspeicher gespeichert sind, wenn der Zwischenspeicher voll ist, oder wenn ein Synchronisationszeichen (MSI2) eines darauf folgenden Datenpakets (P) erreicht wurde, um die in dem Datenstrom ausgewählten Bits durch die gespeicherten und ent(ver)schlüsselten Bits zu ersetzen, und um den Zwischenspeicher zu entleeren.

19. Träger, der von einem Computer gelesen werden kann, auf dem ein Programmcode aufgezeichnet ist, der die von einem der Ansprüche 1 bis 15 definierten Operationen umsetzt, um es dem Computer zu erlauben, einen Strom komprimierter Daten zu verschlüsseln, oder umgekehrt, einen Strom komprimierter verschlüsselter Daten zu entschlüsseln.

Fig. 1A

| I | M | V | NBC |
|---|---|---|---|
| 1 | 1 | 0 | 0 |
| 2 | 010 | 0,5 | 1 |
| 3 | 0010 | 1 | 1 |
| 4 | 0001 0 | 1,5 | 1 |
| 5 | 0000 110 | 2 | 1 |
| 6 | 0000 1010 | 2,5 | 2 |
| 7 | 0000 1000 | 3 | 2 |
| 8 | 0000 0110 | 3,5 | 1 |
| 9 | 0000 0101 10 | 4 | 2 |
| 10 | 0000 0101 00 | 4,5 | 2 |
| 11 | 0000 0100 10 | 5 | 1 |
| 12 | 0000 0100 010 | 5,5 | 2 |
| 13 | 0000 0100 000 | 6 | 2 |
| 14 | 0000 0011 110 | 6,5 | 4 |
| 15 | 0000 0011 100 | 7 | 4 |
| 16 | 0000 0011 010 | 7,5 | 4 |
| 17 | 0000 0011 000 | 8 | 4 |
| 18 | 0000 0010 110 | 8,5 | 4 |
| 19 | 0000 0010 100 | 9 | 4 |
| 20 | 0000 0010 010 | 9,5 | 4 |
| 21 | 0000 0010 000 | 10 | 4 |
| 22 | 0000 0001 110 | 10,5 | 3 |
| 23 | 0000 0001 100 | 11 | 3 |
| 24 | 0000 0001 010 | 11,5 | 3 |
| 25 | 0000 0001 000 | 12 | 3 |
| 26 | 0000 0000 1110 | 12,5 | 3 |
| 27 | 0000 0000 1100 | 13 | 3 |
| 28 | 0000 0000 1010 | 13,5 | 3 |
| 29 | 0000 0000 1000 | 14 | 3 |
| 30 | 0000 0000 0110 | 14,5 | 2 |
| 31 | 0000 0000 0100 | 15 | 2 |
| 32 | 0000 0000 0011 0 | 15,5 | 2 |
| 33 | 0000 0000 0010 0 | 16 | 2 |

Fig. 1B

| I | M | V | |
|---|---|---|---|
| 34 | 0000 0000 0010 1 | -16 | 2 |
| 35 | 0000 0000 0011 1 | -15,5 | 2 |
| 36 | 0000 0000 0101 | -15 | 2 |
| 37 | 0000 0000 0111 | -14,5 | 2 |
| 38 | 0000 0000 1001 | -14 | 3 |
| 39 | 0000 0000 1011 | -13,5 | 3 |
| 40 | 0000 0000 1101 | -13 | 3 |
| 41 | 0000 0000 1111 | -12,5 | 3 |
| 42 | 0000 0001 001 | -12 | 3 |
| 43 | 0000 0001 011 | -11,5 | 3 |
| 44 | 0000 0001 101 | -11 | 3 |
| 45 | 0000 0001 111 | -10,5 | 3 |
| 46 | 0000 0010 001 | -10 | 4 |
| 47 | 0000 0010 011 | -9,5 | 4 |
| 48 | 0000 0010 101 | -9 | 4 |
| 49 | 0000 0010 111 | -8,5 | 4 |
| 50 | 0000 0011 001 | -8 | 4 |
| 51 | 0000 0011 011 | -7,5 | 4 |
| 52 | 0000 0011 101 | -7 | 4 |
| 53 | 0000 0011 111 | -6,5 | 4 |
| 54 | 0000 0100 001 | -6 | 2 |
| 55 | 0000 0100 011 | -5,5 | 2 |
| 56 | 0000 0100 11 | -5 | 1 |
| 57 | 0000 0101 01 | -4,5 | 2 |
| 58 | 0000 0101 11 | -4 | 2 |
| 59 | 0000 0111 | -3,5 | 1 |
| 60 | 0000 0111 | -3 | 2 |
| 61 | 0000 1011 | -2,5 | 2 |
| 62 | 0000 111 | -2 | 1 |
| 63 | 0001 1 | -1,5 | 1 |
| 64 | 0011 | -1 | 1 |
| 65 | 011 | -0,5 | 1 |

Table B-23
("RVLC table for TCOEF")

| INDEX | intra | | | inter | | | BITS | VLC_CODE |
|---|---|---|---|---|---|---|---|---|
| | LAST | RUN | LEVEL | LAST | RUN | LEVEL | | |
| 0 | 0 | 0 | 1 | 0 | 0 | 1 | 4 | 110s |
| 1 | 0 | 0 | 2 | 0 | 1 | 1 | 4 | 111s |
| 2 | 0 | 1 | 1 | 0 | 0 | 2 | 5 | 0001s |
| 3 | 0 | 0 | 3 | 0 | 2 | 1 | 5 | 1010s |
| 4 | 1 | 0 | 1 | 1 | 0 | 1 | 5 | 1011s |
| 5 | 0 | 2 | 1 | 0 | 0 | 3 | 6 | 00100s |
| 6 | 0 | 3 | 1 | 0 | 3 | 1 | 6 | 00101s |
| 7 | 0 | 1 | 2 | 0 | 4 | 1 | 6 | 01000s |
| 8 | 0 | 0 | 4 | 0 | 5 | 1 | 6 | 01001s |
| 9 | 1 | 1 | 1 | 1 | 1 | 1 | 6 | 10010s |
| 10 | 1 | 2 | 1 | 1 | 2 | 1 | 6 | 10011s |

# Fig. 2

Fig. 3